# EUROPEAN PATENT APPLICATION

(11) **EP 4 827 051 A1**
(43) Date of publication of application: **21.10.2026**
(21) Application number: 26170580.0
(22) Date of filing: 02.04.2026
(51) Int. Cl.: H04L 9/40, H04L 61/5014

(54) **EXTERNAL INTERNET PREVENTION**

(30) Priority: 15.04.2025 US 202519179638
(71) Applicant: Schneider Electric USA, Inc., Andover, MA 01810 (US)
(72) Inventor: Pyle, Michael, Mt. Juliet, TN (US); Paillet, Daniel, Lebanon, TN (US)
(74) Representative: Manitz Finsterwald Patent- und Rechtsanwaltspartnerschaft mbB

(57) **Abstract**

The present disclosure is directed to designs, configurations, and methods of communication relating to internet connected devices that impart default security settings in the internet connected device as an additional layer of security. The disclosure is also directed to reducing the discoverability of private internet connected devices by third parties when the private device does not initiate contact with such contact third parties.

## Description

### FIELD

The present disclosure relates to the field of Internet Protocol (IP) apparatuses and devices, in particular the programming and configuration of such apparatuses and devices.

### BACKGROUND

Currently, numerous devices with Ethernet and/or Wi-Fi interfaces are exposed to the internet and risk being reached from the internet without any associated outbound internet communication from the device initiating such contact. This risk occurs either by being connected directly to the internet or via port forwarding from the internet to the device.

This security vulnerability is particularly problematic for industrial automation control system (IACS) devices and other critical devices. For example, devices related to energy, emissions, infrastructure, etc.

Therefore, a need exists for apparatuses, devices, and methods of communication that allow for the IP apparatus or device to operate on a local network but otherwise generally block unwanted exposure or contact from a third-party device through the internet.

### SUMMARY

Aspects of the present disclosure employ an access engine that protects devices having TCP/IP communication capabilities from unwanted connections from third-party devices via the internet. Certain aspects permit a device to detect and/or prevent being exposed to the internet, thus allowing it to take measures to prevent or ignore incoming communications from the internet that are not associated with a communication that the device itself initiated. Having the ability to detect incoming communications provides the ability to create syslog and event log entries and raise alerts when detected.

One aspect of the present disclosure is directed to a method of communication among a plurality of Internet Protocol (IP) devices coupled to a data communication network. The method comprises receiving, by a first IP device, a communication from a second IP device via the data communication network; and executing, by the first IP device, an access engine to ignore or allow communication from the second IP device attempting to access the first IP device. The engine determines whether the second IP device has a routable IP address assigned thereto and determines whether the first IP device solicited the communication from the second IP device. The method also includes initially ignoring the communication from the second IP device attempting to access the first IP device in response to the communication from the second IP device being an unsolicited communication and the second IP device having a routable IP address assigned thereto.

Another aspect of the present disclosure is directed to an IP apparatus comprising an access engine processor and a memory coupled to the access engine processor, wherein the memory stores computer-executable instructions. The access engine process is configured to ignore or allow a communication from an external device having a routable IP address (i.e. an external IP device having a routable IP address assigned thereto) attempting to access the IP apparatus. When the IP apparatus receives the communication from the external device having a routable IP address via a communication network, the computer-executable instructions executed by the access engine processor cause the access engine processor to determine whether the IP apparatus solicited the communication from the external device having a routable IP address or initiated and established a secure channel with the external device having a routable IP address. The computer-executable instructions executed by the access engine processor further cause the access engine processor to allow the communication from the external device having a routable IP address to the IP apparatus in response to the communication being solicited by the IP apparatus or the IP apparatus initiating and establishing a secure channel with the external device having a routable IP address.

Still further aspects of the present disclosure are directed to an Internet Protocol (IP) apparatus having an IP address assigned thereto. The apparatus comprises a communications processor configured for communicating on a data communication network in accordance with Transmission Control Protocol/Internet Protocol (TCP/IP) protocols and a memory coupled to the communications processor. The memory has computer-executable instructions stored thereon that, when executed by the communications processor, cause the communications processor to initially not allow any attempt to assign a routable IP address to the IP apparatus or change the routable IP address of the IP apparatus.

Other objects and features will be in part apparent and in part pointed out hereinafter.

### BRIEF DESCRIPTION OF THE DRAWINGS

FIG. 1 shows a device and network configuration of Internet Protocol (IP) devices for communication with a data communication network.
FIG. 2 shows an alternative device and network configuration of Internet Protocol (IP) devices for communication with a data communication network.
FIG. 3 illustrates a method for allowing or ignoring communication from a second IP device (Y) attempting to access a first IP device (X).
FIG. 4 illustrates a method for granting or denying attempts to assign a routable IP address to an IP apparatus or change the routable IP address of the IP apparatus.

Corresponding reference characters indicate corresponding parts throughout the drawings.

### DETAILED DESCRIPTION

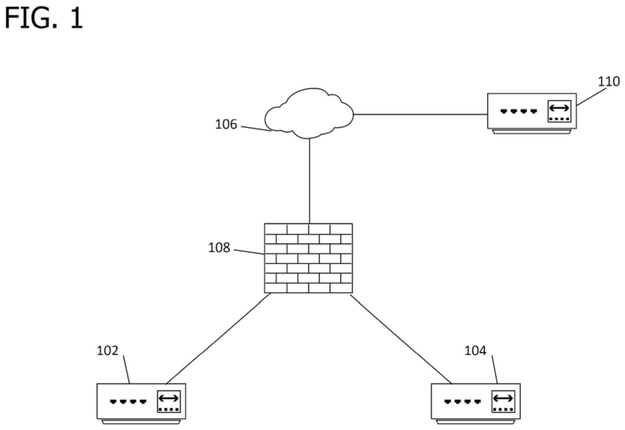

Referring now to FIG. 1, an example configuration of Internet Protocol (IP) devices 102, 104 configured for communication with a data communication network 106, such as the internet, via a firewall 108 is shown. In this configuration, the firewall 108 of the local network allows port forwarding to both IP devices 102, 104. As will be described in greater detail below, IP device 102 as shown in FIG. 1 comprises an industrial automation control system (IACS)/Operational Technology (OT) device having a web browser and is configured with safeguards and/or an access engine as discussed herein to protected against communications from devices with routable IP addresses (e.g., IP device 110). In contrast, IP device 104 comprises an IACS/OT device having a web browser and configured with no safeguards to mitigate against communications from devices with routable IP addresses. That is, IP device 104 corresponds to a standard IP device as currently used in the industry.

IP device 110 is an IP device that is external to the local network (i.e. outside of the firewall 108) and has a routable IP address. In the configuration of FIG. 1, IP device 110 attempts to communicate with or access either of the local IP devices 102, 104 via the data communication network 106.

As shown in FIG. 1, IP device 102 is configured to protect against communications/access from the IP device 110. In the methods, systems, and apparatuses described in further detail herein this protection is in the form of an IP device 102 configured with an access engine for allowing or ignoring communication from IP device 110. That is, IP device 102 receives a communication from IP device 110 and IP device 102 executes an access engine to grant or deny permission for IP device 110 to access IP device 102 (i.e. allows or ignores the communication from IP device 110).

In one example, IP device 102 executes an access engine comprising determining whether IP device 110 is assigned a routable IP address and determining whether the communication from IP device 110 was in response to a communication initiated by the IP device 102. The communication from IP device 110 to IP device 102 is initially ignored by the access engine in response to the communication from IP device 110 being an unsolicited communication and IP device 110 having a routable IP address assigned thereto. In certain embodiments, the access engine may allow IP device 110 to access IP device 102 when the communication from IP device 110 was solicited by IP device 102 and/or when IP device 102 initiated and established a secure channel with IP device 110.

In certain embodiments, after the access engine initially ignores attempts by IP device 110 to access IP device 102, the access engine may further comprise allowing IP device 110 to access IP device 102 in response to IP device 110 having a pre-approved IP address assigned thereto. For example, IP device 102 may contain a list of pre-approved IP addresses and the access engine may allow IP device 110 to access IP device 102 in response to IP device 110 having a IP address assigned thereto that is on the pre-approved IP address list of IP device 102.

In one embodiment, the IP device 102 is assigned a routable IP address, IP device 110 is assigned a routable IP address, and IP device 110 is coupled to the same network segment as IP device 102. In such an embodiment, the access engine may, after initially ignoring attempts for IP device 110 to access IP device 102, further comprise allowing IP device 110 to access IP device 102 (i.e. allowing the communication from IP device 110).

In still further embodiments, after the access engine initially ignores attempts for IP device 110 to access IP device 102, the access engine may further comprise allowing IP device 110 to access IP device 102 if the IP devices and/or configuration otherwise satisfies a condition of the access engine of IP device 102.

In contrast, IP device 104 is not configured with protections against communications from external devices with routable IP addresses. That is, IP device 104 is not configured with an access engine for responding to communication from IP device 110. When IP device 104 receives a communication from IP device 110, IP device 104 allows the communication/contact.

While IP device 102 is configured with the safeguards to protect and appropriately respond to communications from a second IP device having a routable IP address, such as IP device 110, IP device 104 is exposed to such communications and vulnerable. In this way, it can be seen that an IP device (e.g., IP device 102) of the present disclosure having certain safeguards and/or access engines provides a considerable advantage over standard IP devices (e.g., IP device 104).

Devices exposed to the Internet, such as IP device 104, are generally exposed directly to the internet (via port forwarding from a firewall or router) and can be reached from the internet without any associated outbound internet communications initiated on the device's part. The ability of these devices (e.g., 104) to be reached at all times presents a security concern, particularly for devices critical to business, devices implicating national security, etc. For example, these security concerns are particularly relevant for IACS/OT devices, devices related to energy, devices related to emissions, devices related to critical infrastructure, etc.

The ability for third parties to reach internet exposed devices may be unintended or unknown by the owner of the device. In other situations, the owner or operator of the device may have intentionally exposed the device in such a way as to be reachable (e.g., either by being connected directly to the internet 106 or via port forwarding at the firewall 108 from the internet to the device).

Regardless of the intentional or unintentional nature of such a configuration, a need exists to reduce the possibility of exposing devices 102 and 104 such that they are reachable via the internet connection. In an embodiment, the manufacturer of device 102 may design it in such a way to as to, by default, prevent it from being accessed by a second or external device having a routable IP address (e.g., an external IP device having a routable IP address assigned thereto). This ensures that device 102 is secure-by-default, as opposed to requiring the end-user to consider the security implications of the device. While designing the device 102 in such a way as to be secure-by-default, it will be understood that such a design is not intended to be impervious to circumvention or all attempts against the device. However, designing default security procedures and safeguards in the internet-connected device 102 provides an additional layer of security and represent an improvement over the current state of the field.

In certain situations, the device 102 may be designed such that it cannot be contacted by an external routable IP address, but can still operate and communicate within a local network (i.e. behind firewall 108). This is an important design configuration, as it is usually important that the device 102 is secure from external intrusions but is able to be used for all of its intended purposes on the local network.

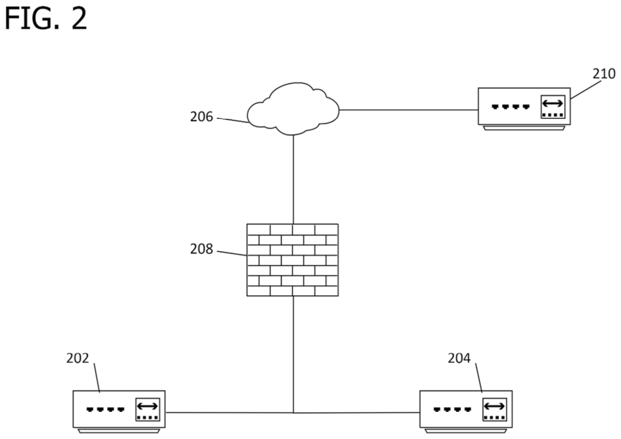

FIG. 2 illustrates an alternative configuration of Internet Protocol (IP) devices 202, 204 configured for communication with a data communication network 206, such as the internet, via a firewall 208. IP device 210 is an IP device that is external to the local network (i.e. outside of the firewall 208) and has a routable IP address. In the configuration of FIG. 2, IP device 210 attempts to communicate with or access either of the local IP devices 202, 204 via the data communication network 206.

IP devices 202, 204 are configured as described above. That is, IP device 202 is configured with the access engine and safeguards, while IP device 204 is not.

FIG. 2 illustrates an embodiment wherein the IP devices 202, 204 can still operate and communicate within a local network (i.e. behind firewall 208). Although the access engine of IP device 202 may ignore attempts by IP device 210 (having a routable IP address) to access IP device 202, the access engine of IP device 202 may grant permission for a second IP device having a routable IP address and located on the local network (e.g., IP device 204) to access IP device 202. In one embodiment, the access engine and safeguards of IP device 202 allow communication from a second IP device when a secure channel has been established by IP device 202 and the second IP device. For example, if IP device 202 first establishes a channel with IP device 204 (e.g., a secure channel), IP device 202 will allow communications from IP device 204. In another embodiment, the access engine and safeguards of IP device 202 allows communication from a second IP device (e.g., IP device 204) when the second IP device is coupled to the same network segment as IP device 204.

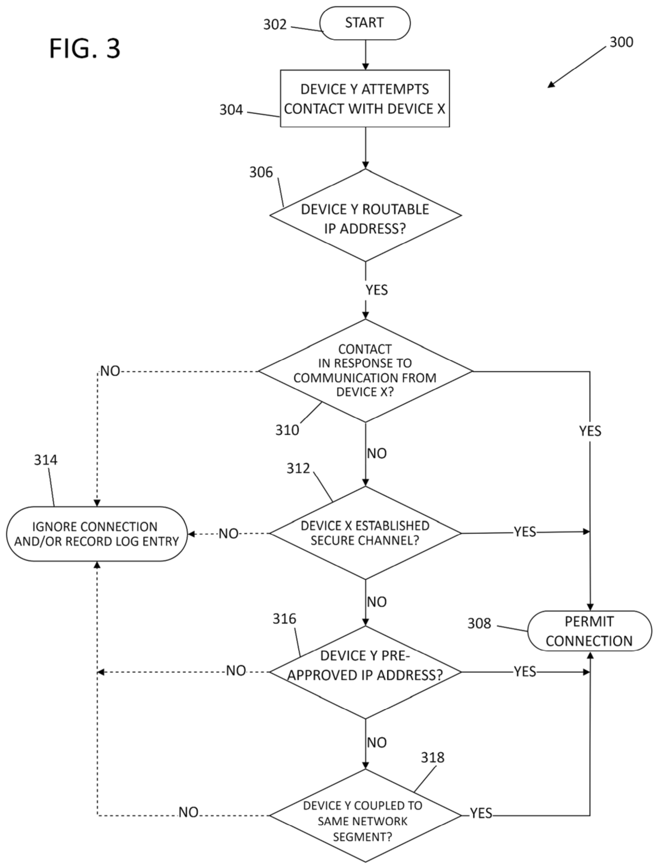

Referring now to FIG. 3, a method 300 for granting or ignoring communications from a second IP device (Y) to contact a first IP device (X) (i.e. a method for Device X allowing or ignoring an attempted communication from Device Y) is provided. In the method of FIG. 3, beginning at 302, the first IP Device X is the device to be protected by the access engine and steps of the method are directed to allowing or ignoring communication from the second IP device attempting to access the first IP device. The second IP Device Y is an IP device that attempts to communicate with the first IP Device X via a data communications network. After Device Y attempts such contact at 304, Device X evaluates in step 306 whether Device Y has a routable IP address.

Device X, and the access engine thereof, next evaluates in step 310 whether the attempted communication by Device Y was in response to an initial communication from Device X. If the contact from Device Y was in response to communication from Device X, i.e., Device X solicited the communication, Device Y is permitted to connect with and communicate with Device X as shown in step 308 (i.e. the communication from Device Y is allowed). If the contact from Device Y was not in response to communication from Device X (i.e. was an unsolicited communication), the method initially ignores the communication from Device Y. Optionally, Device X may also record a log entry as shown in 314.

The method next evaluates whether Device X established a secure channel with Device Y in step 312. If Device X initiated and established a secure channel with Device Y, Device Y is permitted to connect with and communicate with Device X via the secure channel as shown in step 308. If Device X did not initiate and establish a secure channel with Device Y, the method initially ignores the communication from Device Y. Optionally, Device X may also record a log entry as shown in 314.

In step 316, the method evaluates whether Device Y has a pre-approved IP address assigned thereto. If Device Y has an IP address that is pre-approved by Device X (and the access engine thereof), Device Y is permitted to connect with and communicate with Device X as shown in step 308. If Device Y does not have a pre-approved IP address, the method initially ignores the communication from Device Y. Optionally, Device X may also record a log entry as shown in 314.

The methods and devices of the present disclosure, including the access engine of the protected devices, are primarily directed to protecting a first IP device from unwanted contact or communication from a second IP device external to the local network. For example, as shown in FIG. 1, an internet connected device outside of the firewall. Therefore, in certain embodiments, it is permissible for a local device having a routable IP address to contact a first IP device on the same local network. As shown in the method of FIG. 3 at step 318, if Device Y is coupled to the same network segment as Device X, Device Y is permitted at step 308 to connect with and communicate with Device X. On the other hand, if Device Y is not coupled to the same network segment as determined at 318, Device X ignores the communication from Device Y. Optionally, Device X may also record a log entry as shown in 314.

While step 314 is directed to recording a log entry, it will be understood that Device X may further display an error message, raise an alarm, etc. in addition to or in place of the log entry.

Certain other embodiments of the present disclosure are directed to an Internet Protocol (IP) apparatus that is designed to operate in a predetermined manner when an external device attempts to assign or change the routable IP address of the IP apparatus. That is, particular methods, systems, and devices for responding to external communications that specifically attempt to alter the configuration of an IP device.

For example, an IP apparatus having a routable IP address may be configured such that, if a third party or other internet connected device attempts to adjust, modify, or change the routable IP address of the IP apparatus, the IP apparatus will reject the attempt and ignore the attempted communication. In certain embodiments, the IP apparatus will reject the attempt and do at least one of the following actions: record a log of the attempt, display an error message, raise an alarm, etc.

All IP (TCP/UDP/ ...) devices must have a default IP address in the non-routable address range to be used for configuration. In certain embodiments, the IP apparatus configured with a default non-routable IP address will reject attempts by a third party or an external device to modify, change, or assign a new routable IP address to the IP apparatus, and will instead assign the IP apparatus a default, or retain a non-routable IP address in response to such attempted contact.

For example, in one embodiment, the IP apparatus having a non-routable IP address will reject any attempt to assign a new routable IP address to the apparatus (e.g., manually by a human machine interface (HMI), using dynamic host configuration protocol (DHCP), or via a web interface) and record a log of the attempt, display or post an error message stating that the device cannot be configured with a new routable IP address, display or post an error code linked to a similar message in the product documentation, raise an alarm, etc. The IP apparatus will then revert to its default, non-routable IP address until it is assigned a new non-routable IP address. The user manual will clearly state that the IP apparatus will not allow a change in the routable IP address or a new routable IP address to be assigned to it.

In certain embodiments, change in the non-routable IP address of an IP apparatus or change in the routable IP address may be permitted by certain authorized users on the local network of the IP apparatus. That is, the default design of the IP apparatus from the manufacturer may prevent modification to a routable IP address, but this default may be overridden by an internal party having the requisite credentials (e.g., administrator level credentials).

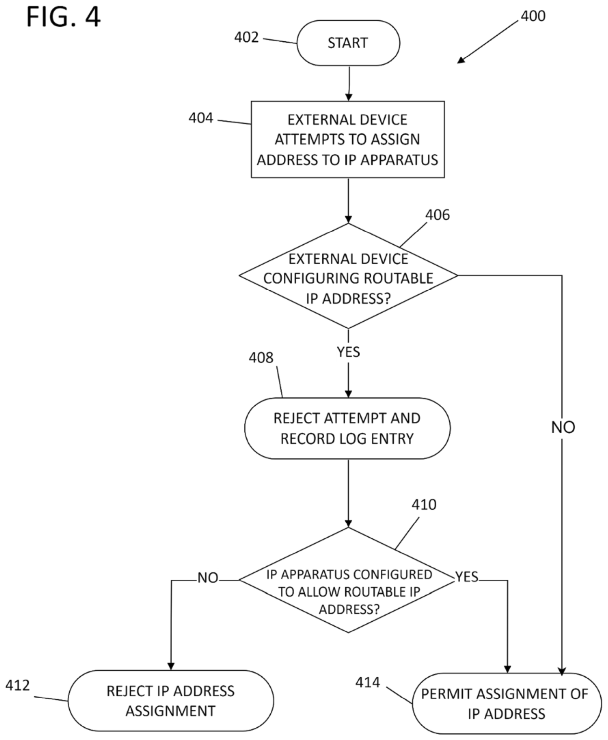

FIG. 4 illustrates an exemplary method 400 by which an Internet Protocol (IP) apparatus is configured to respond to attempts to assign a routable IP address to the apparatus after any initial configuration by the manufacturer. Although discussion herein is directed to assigning a new routable IP address, it will be understood that this method is also applicable to attempts to modify the IP address of the IP apparatus.

The IP apparatus has a routable IP address assigned thereto and comprises a communications processor configured for communicating on a data communication network in accordance with Transmission Control Protocol/Internet Protocol (TCP/IP) protocols and a memory coupled to the communications processor. The memory has computer-executable instructions stored thereon that, when executed by the communications processor, cause the communications processor to perform the steps illustrated in FIG. 4 and initially deny any attempt to assign a new routable IP address to the IP apparatus or change the routable IP address of the IP apparatus.

The external device referenced in FIG. 4 may be any external device that attempts contact with the IP apparatus. For example, an external device comprising a human machine interface (HMI), an external device capable of communication on a data communication network via at least one of a web interface and a dynamic host configuration protocol (DHCP), etc.

Beginning at 402 of the method 400 shown in FIG. 4, an external device attempts in step 404 to communicate with the IP apparatus via a data communication network in accordance with Transmission Control Protocol/Internet Protocol (TCP/IP) protocols. This attempted communication is an attempt to assign a new routable IP address to the IP apparatus.

The communications processor of the IP apparatus determines in step 406 whether the external device is attempting to configure a routable IP address. If the external device is attempting to configure a routable IP address, the communications processor of the IP apparatus initially rejects the attempt and records a log entry at step 408. If the external device is attempting to configure a non-routable IP address, the communication processor permits the external device to assign a new non-routable IP address in step 414, and optionally log the assignment of the new IP address

In step 410, the communications processor of the IP apparatus determines whether it has been configured to allow assignment of a new routable IP address. If the IP apparatus has not been configured to allow assignment of a routable IP address, as determined at 410, the communication processor rejects the attempted contact by the external device in step 412 and assigns or retains the default non-routable IP address of the IP apparatus. Optionally, the IP apparatus may record a further log entry of the attempted contact and the assignment of the non-routable IP address to the IP apparatus. If the IP apparatus has been configured to allow a routable IP address to be assigned, as determined at 410, the communication processor permits the external device to assign a new routable IP address to the IP apparatus in step 414, and optionally log the assignment of the new IP address.

Having described certain specific embodiments of the figures, further embodiments of the present disclosure are discussed herein.

Certain aspects of the present disclosure may be directed to apparatuses and methods of communication wherein an IP apparatus ignores all unsolicited incoming communications from other devices (e.g., a second device) with a routable IP address. For example, the IP apparatus may ignore (i.e. drop) unsolicited incoming communication from device(s) with a routable source IP address and make a syslog entry noting this unsolicited communication and/or raise an alert or alarm. In this way, the IP apparatus can be configured to eliminate visibility and access of the IP apparatus to devices outside of the internal network.

In certain embodiment, the IP apparatus may permit communication from a second device with a routable IP address if the IP apparatus initiated the communication (e.g., a TLS tunnel initiated by the IP apparatus to an external connection on the Internet or an IP apparatus accessing a web page on the Internet). That is, an IP apparatus may allow communication from a second device with a routable IP address if the IP apparatus has opened up such lines for communication and been the party to initiate the contact between the IP apparatus and second device.

In response to ignoring unsolicited incoming communications from devices with a routable IP address, as described elsewhere herein, the IP apparatus may be configured to record a log entry of the unsolicited communication. In other embodiments, the IP apparatus may display an error message or error code. In still further embodiments, the error message, error code, and/or log entry may be transmitted to a party on the local network. For example, the error message, error code, and/or log entry may be transmitted to a syslog server or SIEM for access by security personnel or an administrator so that the threat risk of the unsolicited communication can be further evaluated.

Referring now to any of the above embodiments, systems, and configurations, in various embodiments an IP apparatus or device may be assigned a non-routable IP address according to IPv4 RFC1918 or IPv6 RFC4193. For example, the non-routable IP address may be an IPv4 address of 10.0.0.0/8 (i.e. the range of 10.0.0.0 - 10.255.255.255); 172.16.0.0/12 (i.e. the range of 172.16.0.0 - 172.31.255.255); or 192.168.0.0/16 (i.e. the range of 192.168.0.0 - 192.168.255.255). Alternatively, the non-routable IP address may be an IPv6 address of FC00::/7 or FD00::/7. FC00::/7 is generally a reserved IPv6 private address range by the IANA (Internet Assigned Numbers Authority). FD00::/7 generally represents the currently used IPv6 private ranges.

When an IP apparatus or device as described above is assigned one of the above-noted non-routable IP addresses it may be desirable, in one embodiment of the disclosure, to ignore all unsolicited incoming communications from external devices (e.g., a second IP device) with a routable IP address. For example, the IP apparatus may ignore unsolicited incoming communication from device(s) with a routable source IP address and make a syslog entry noting this unsolicited communication and/or raise an alert or alarm. In this way, the IP apparatus can be configured to eliminate visibility or access of the non-routable IP apparatus to devices outside of the internal network.

In other embodiments, an IP apparatus or device as described above is assigned one of the above-noted non-routable IP addresses and does allow communication from a second device with a routable IP address in certain circumstances. In one embodiment, the communication is only allowed if the IP apparatus initiated the contact (e.g., a TLS tunnel initiated by the IP apparatus to an external connection on the Internet or an IP apparatus accessing a web page on the Internet). That is, the IP apparatus having one of the above-noted non-routable IP addresses may be permitted to receive communication from a second device with a routable IP address if the IP apparatus has opened up such lines for communication and was the party to initiate the contact between the IP apparatus and the second device. In other embodiments, the IP apparatus or device may allow communication from a second device with a routable IP address if the second device has a certain pre-approved IP routable IP address. Still further, in additional embodiments, the IP apparatus maybe configured with a routable IP address itself and may allow communication from a second device with a routable IP address if the second device is coupled to the same network segment as the as the IP apparatus or device.

In certain embodiments, an IP device or apparatus may be configured to deny or ignore any communication from a third party or an external device that is an attempt to assign a new routable IP address or modify the routable IP address of the IP device or apparatus. It is a goal of the present disclosure, in one aspect, to design and configure an IP device or apparatus in such a way that a communication from a third party or an external device that is an attempt to assign a new routable IP address or modify the routable IP address of the IP device or apparatus is allowed only in narrowly defined circumstances and only by specific configuration steps. For example, it may be possible to allow for disabling the IP device or apparatus' automatic rejection of attempts to assign it a new routable IP address behind a configuration interface reachable only by administrator level credentials. The IP apparatus should be specifically designed such that this disabling step may only be conducted by specific users of the internal network. That is, although the default rejection of attempts to assign a new routable IP address may be ultimately disabled, this ability to overcome the default actions should remain prohibited for any party or device outside of the internal network.

In certain embodiments, a party on the local network with administrator level credentials is permitted to assign a new routable IP address to, or modify the routable IP address of, the IP apparatus by a human machine interface (HMI), web interface, dynamic host configuration protocol (DHCP), or combinations thereof.

While discussion herein is directed to the manufacture, design, programming, configuration, etc. of IP apparatuses or devices having certain safeguards or access engines, it will be understood that the desired safeguards and access engines may be implemented through any suitable method or steps. For example, the IP apparatuses described herein may comprise a processor and a memory coupled to the processor, wherein the memory has computer-executable instructions stored thereon. The instructions, when executed by the access engine processor, may cause the access engine processor to do any of the programming, configurations, or access engine actions (e.g., determination of the nature of the IP address and the communication, allowing or ignoring the communication, recording a log of an attempted communications, etc.) described herein to implement the safeguards.

Certain embodiments of the present disclosure are directed to a method of communication among a plurality of IP devices coupled to a data communication network. The method comprises receiving, by a first IP device, communication from a second IP device via the data communication network; and executing, by the first IP device, an access engine to ignore or allow communication from the second IP device attempting to access the first IP device. In various embodiments, executing the access engine comprises determining whether the second IP device is assigned a routable IP address; determining whether the first IP device solicited the communication from the second IP device; and initially denying permission for the second IP device to access the first IP device in response to the communication from the second IP device being an unsolicited communication and the second IP device having a routable IP address assigned thereto. That is, in various embodiments, any unsolicited communication from a second IP device having a routable IP address will be initially ignored by the first IP device.

The access engine may still allow the communication if certain conditions are met. For example, where the second IP device is coupled to the same network segment as the first IP device (e.g., a local network), or when the access engine of the first device has been configured to allow communications from the routable IP address of the second device (e.g., if the second device has a pre-approved IP address). In another example, the access engine may allow second IP device to access the first IP device via a secure channel in response to the first IP device initiating and establishing the secure channel with the second IP device.

In certain embodiments, the first IP device or apparatus comprises an access engine processor and a memory coupled to the access engine processor, and the list of pre-approved IP addresses are stored within memory of the first IP device or IP apparatus. In other embodiments, the list of pre-approved IP addresses may be stored at a dedicated location on the local network.

In some embodiment, the first IP device or IP apparatus, access engine thereof, or access engine processor thereof may record the IP address of the second IP device or external device having a routable IP address attempting to access the IP apparatus, cross-check the recorded IP address against the list of pre-approved IP addressed (i.e. stored in the memory or at a dedicated location on the local network), and then act in the manner set forth above depending on whether the recorded IP address is a pre-approved IP address.

When the list of pre-approved IP addresses is stored within the memory of the first IP device or IP apparatus, it may be desirable for this list to be updated to change from time to time. Therefore, in certain embodiments, the instructions of the first IP device or IP apparatus, when executed by the access engine processor of the first IP device or IP apparatus, cause the access engine processor of the first IP device or IP apparatus to permit a party on the local network with administrator level credentials to modify the pre-approved IP address list. In other embodiments where the list of pre-approved IP addresses is stored at a dedicated location on the local network, the local network may permit a party on the local network with administrator level credentials to modify the pre-approved IP address list.

Additional embodiments are directed to an IP apparatus comprising an access engine processor configured to ignore or allow a communication from an external device having a routable IP address attempting to access the IP apparatus and a memory coupled to the access engine processor. The memory has computer-executable instructions stored thereon and, when executed by the access engine processor in response to the IP apparatus receiving the communication from the external device having a routable IP address via a communication network, the access engine processor is configured to conduct any of the steps or actions discussed above. Similar to the above methods, devices, and apparatuses, the IP apparatus may generate a record log entry, error message, etc. upon initially ignoring communications from the external device having a routable IP address.

Although discussion herein is directed to attempted communications or access by second IP devices, external devices having a routable IP address (i.e. an external IP device having a routable IP address assigned thereto), etc., it will be understood that the described methods, systems, and configurations are equally applicable to actions by any device that are an attempt interact with the protected device (e.g., IP apparatus or first IP device) of the present disclosure. In certain embodiments, an IP apparatus is located on an internal network and the attempt at communication with and/or access of the IP apparatus originates from an external device having a routable IP address outside of the internal network (e.g., via a web interface). In other embodiments, a "first" IP device is located on an internal network and the attempt at communication with and/or access of the first IP device originates from a "second" IP device outside of the internal network (e.g., the Internet).

While discussion herein is directed IP devices or IP apparatuses which may be a IACS, OT devices, devices related to energy, devices related to emissions, devices related to infrastructure, etc., it will be understood that the described methods and systems are equally applicable to any device which may be an internet connected device. For example, any Internet of Things (IOT) or Industrial Internet of Things (IIOT) device.

### EXAMPLES:

### Example 1:

FIG. 1 illustrates an example configuration described in further detail above of IACS/OT (i.e. IP) devices 102, 104 configured for communication with a data communication network 106, such as the internet, via a firewall 108. An evaluation of the firewall log confirmed that port forwarding was permitted to both devices 102, 104.

IACS/OT IP device 102 was configured with one or more safeguards or configurations noted above.

In one test, IACS/OT IP device 102 was assigned a non routable IPv4 IP address selected from 10.0.0.0/8; 172.16.0.0/12; or 192.168.0.0/16 or a non-routable IPv6 IP address selected from FC00::/7 or FD00::/7 and configured to receive communications from outside of the local network (e.g., communication with the internet 106 and device 110 through the firewall 108). IACS/OT IP device 102 comprised an access engine processor configured to ignore or allow a communication from an external device having a routable IP address attempting to access the IP apparatus; and a memory coupled to the access engine processor, the memory having computer-executable instructions stored thereon. The computer-executable instructions, when executed by the access engine processor in response to the IP apparatus receiving the communication from an external device having a routable IP address via a communication network, were designed to cause the access engine processor to: determine whether the communication from the external device having a routable IP address device is an unsolicited communication; and initially ignore the communication from the external device having a routable IP address if the communication is an unsolicited communication.

The external device having a routable IP address assigned thereto 110 initiated unsolicited communications in an attempt to contact and access IACS/OT device 102. The computer-executable instructions stored on the memory of IACS/OT IP device 102 were executed by the access engine processor and the communications from the external device having a routable IP address 110 were ignored by IP device 102. That is, even though the firewall was configured to allow port forward, IACS/OT device 102 was configured with appropriate safeguards to prevent any response from the device.

In contrast, IACS/OT IP device 104 was not configured with these safeguards. The external device having a routable IP address assigned thereto 110 initiated unsolicited communications in an attempt to contact and access IACS/OT device 104. As the firewall was configured to allow such action, and the device did not have the safeguards set forth above, IACS/OT IP device 104 allowed the communications from device 110 and device 110's attempt at accessing IACS/OT IP device 104 were successful.

It can be seen from this example, that the configuration of discrete devices to have certain safeguards (e.g., computer-executable instructions, where, when executed by an access engine processor, cause the access engine processor to ignore any unsolicited communication or attempts at contact from external device having a routable IP address and not meeting certain conditions) allows for improved security. This is particularly important where the first level of security (i.e. the firewall) has been intentionally or unintentionally configured such that the device is exposed to manipulation by external devices.

### Example 2:

A further test was conducted with IACS/OT IP devices 102, 104 shown in FIG. 1.

The devices were configured as described in Example 1. That is, IACS/OT IP device 102 was configured with the safeguards (i.e. to ignore unsolicited attempts at communication from an external device having a routable IP address assigned thereto) and IACS/OT IP device 104 was not configured with the safeguards. The firewall log showed that both IACS/OT IP device 102 and IACS/OT IP device 104 were exposed to the internet.

In this test, the Shodan search engine was utilized in an attempt to discover the devices. A Shodan search for IACS/OT IP device 102 produced no results. That is, IACS/OT IP device 102 was not discoverable and the safeguard worked as intended to prevent unintentional exposure of the IACS/OT IP device. A Shodan search for IACS/OT IP device 104 did discover the device. That is, with no safeguard procedures present on the device itself, IACS/OT IP device 104 was unintentionally discoverable.

This further example demonstrates the additional layer of security that is present when implementing the safeguards described herein. For IACS/OT or other critical devices (e.g., device related to energy, emissions, etc.) it is important that the device reduce its discoverability by external parties. In a configuration such as shown in FIG. 1, where the first layer of security - the firewall - is not sufficient, the configuration of the device itself was able to shield IACS/OT device 102 from unintentional exposure to the internet.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

Having described the disclosure in detail, it will be apparent that modifications and variations are possible without departing from the scope of the disclosure defined in the appended claims.

When introducing elements of the present disclosure or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the disclosure are achieved and other advantageous results attained.

As various changes could be made in the above apparatuses, devices, methods, configurations, and designs without departing from the scope of the disclosure, it is intended that all matter contained in the above description and shown in the accompanying drawings shall be interpreted as illustrative and not in a limiting sense.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. A method of communication among a plurality of Internet Protocol (IP) devices coupled to a data communication network, the method comprising:
receiving, by a first IP device, a communication from a second IP device via the data communication network; and
executing, by the first IP device, an access engine to ignore or allow communication from the second IP device attempting to access the first IP device, wherein executing the access engine comprises:
determining whether the second IP device has a routable IP address assigned thereto;
determining whether the first IP device solicited the communication from the second IP device; and
initially ignoring the communication from the second IP device attempting to access the first IP device in response to the communication from the second IP device being an unsolicited communication and the second IP device having a routable IP address assigned thereto.

2. The method of claim 1, wherein executing the access engine further comprises allowing the second IP device to access the first IP device in response to the communication from the second IP device being a solicited communication by the first IP device.

3. The method of claim 1, wherein executing the access engine further comprises allowing the second IP device to access the first IP device via a secure channel in response to the first IP device initiating and establishing the secure channel with the second IP device.

4. The method of claim 1, wherein the first IP device is assigned a routable IP address, the second IP device is assigned a routable IP address, and the second IP device is coupled to the same network segment as the first IP device; and
wherein the access engine allows the second IP device to access the first IP device,
wherein executing the access engine in particular further comprises generating and recording a log entry of the allowed communication from the second IP device.

5. The method of claim 1, wherein executing the access engine further comprises determining whether the second IP device has a pre-approved IP address assigned thereto, and allowing the second IP device to access the first IP device when the second IP device has a pre-approved IP address assigned thereto, or
wherein executing the access engine further comprises generating and recording a log entry upon initially ignoring the communication from the second IP device attempting to access the first IP device.

6. An Internet Protocol (IP) apparatus comprising:
an access engine processor configured to ignore or allow a communication from an external device having a routable IP address attempting to access the IP apparatus; and
a memory coupled to the access engine processor, the memory having computer-executable instructions stored thereon, wherein the computer-executable instructions, when executed by the access engine processor in response to the IP apparatus receiving the communication from the external device having a routable IP address via a communication network, cause the access engine processor to:
determine whether the IP apparatus solicited the communication from the external device having a routable IP address or initiated and established a secure channel with the external device having a routable IP address; and
allow the communication from the external device having a routable IP address to the IP apparatus in response to the communication being solicited by the IP apparatus or the IP apparatus initiating and establishing a secure channel with the external device having a routable IP address.

7. The IP apparatus of claim 6, wherein the computer-executable instructions, when executed by the access engine processor in response to the IP apparatus receiving the communication from the external device having a routable IP address via a communication network, further cause the access engine processor to:
initially ignore the communication from the external device having a routable IP address attempting to access the IP apparatus wherein the communication from the external device having a routable IP address is an unsolicited communication

8. The IP apparatus of claim 7, wherein the computer-executable instructions, when executed by the access engine processor in response to the IP apparatus receiving the communication from the external device having a routable IP address via a communication network, further cause the access engine processor to:
allow the external device having a routable IP address to communicate with the IP apparatus when the external device having a routable IP address is coupled to the same network segment as the IP apparatus, or.
wherein the computer-executable instructions, when executed by the access engine processor in response to the IP apparatus receiving the communication from the external device having a routable IP address via a communication network, further cause the access engine processor to generate and record a log entry upon initially ignoring the communication from the external device having a routable IP address attempting to access the IP apparatus.

9. The IP apparatus of claim 6, wherein the computer-executable instructions, when executed by the access engine processor in response to the IP apparatus receiving the communication from the external device having a routable IP address via a communication network, further cause the access engine processor to:
determine whether the external device having a routable IP address has a pre-approved IP address assigned thereto; and
allow the external device having a routable IP address to access the IP apparatus when the external device having a routable IP address has a pre-approved IP address assigned thereto,
wherein the computer-executable instructions, when executed by the access engine processor in response to the IP apparatus receiving the communication from the external device having a routable IP address via a communication network, in particular further cause the access engine processor to generate and record a log entry of the communication from the external device having a routable IP address attempting to access the IP apparatus.

10. An Internet Protocol (IP) apparatus having an IP address assigned thereto, the apparatus comprising:
a communications processor configured for communicating on a data communication network in accordance with Transmission Control Protocol/Internet Protocol (TCP/IP) protocols; and
a memory coupled to the communications processor, the memory having computer-executable instructions stored thereon that, when executed by the communications processor, cause the communications processor to initially deny any attempt to assign a routable IP address to the IP apparatus or change the routable IP address of the IP apparatus.

11. The IP apparatus of claim 10, wherein the computer-readable instructions, when executed by the communications processor, further cause the communications processor, after initially denying any attempt to assign a routable IP address to the IP apparatus or change the routable IP address of the IP apparatus, to revert the IP apparatus to a default, non-routable IP address of the IP apparatus.

12. The IP apparatus of claim 10, wherein the computer-readable instructions, when executed by the communications processor, further cause the communications processor to record a log entry after initially denying any attempt to assign a routable IP address to the IP apparatus or change the routable IP address of the IP apparatus.

13. The IP apparatus of claim 10, wherein the computer-readable instructions, when executed by the communications processor, further cause the communications processor, after initially denying any attempt to assign a routable IP address to the IP apparatus or change the routable IP address of the IP apparatus, to permit a party with administrator level credentials to assign a routable IP address to the IP apparatus or change the routable IP address of the IP apparatus via a local network.

14. The IP apparatus of claim 10, wherein the attempt to assign a routable IP address to the IP apparatus or change the routable IP address of the IP apparatus is enacted by a human machine interface (HMI), a dynamic host configuration protocol (DHCP), a web interface, or combinations thereof,
wherein the attempt to assign a routable IP address to the IP apparatus or change the routable IP address of the IP apparatus is in particular enacted by a human machine interface (HMI).

15. The IP apparatus of claim 14, wherein the attempt to assign a routable IP address to the IP apparatus or change the routable IP address of the IP apparatus is enacted by an external device communicating on the data communication network via at least one of a web interface and a dynamic host configuration protocol (DHCP).
